# EUROPÄISCHE PATENTSCHRIFT

(11) **EP 1 691 988 B1**
(45) Veröffentlichungstag und Bekanntmachung des Hinweises auf die Patenterteilung: **21.05.2008**
(21) Anmeldenummer: 04797271.6
(22) Anmeldetag: 29.11.2004
(51) Int. Cl.: B42D 15/10

(54) **IDENTIFIKATIONSKARTE UND VERFAHREN ZU DEREN HERSTELLUNG**
IDENTIFICATION CARD AND THE PRODUCTION METHOD THEREOF
CARTE D'IDENTIFICATION ET SON PROCEDE DE PRODUCTION

(30) Priorität: 10.12.2003 CH 21092003
(43) Veröffentlichungstag der Anmeldung: 23.08.2006
(73) Patentinhaber: Landqart, 7302 Landquart (CH)
(72) Erfinder: DOSTMANN, Andreas, CH-7015 Tamins (CH); BÜRKI, Roman, CH-7270 Davos Platz (CH); RASMUSSEN, Sören, CH-7304 Maienfeld (CH)
(74) Vertreter: Bremi, Tobias Hans
(86) Internationale Anmeldenummer: PCT/CH2004/000714
(87) Internationale Veröffentlichungsnummer: WO 2005/056304

(56) Entgegenhaltungen:
- US-A- 2 588 067
- US-A- 3 566 521
- US-A- 3 601 913
- US-A- 4 545 838

## Beschreibung

### TECHNISCHES GEBIET

Die vorliegende Erfindung betrifft ein Sicherheitsdokument mit wenigstens einer Papierlage, welche beidseitig von jeweils einer transparenten Kunststoffschicht bedeckt ist. Weiterhin betrifft sie eine Tasche aus transparenten Kunststoff, welche zur Herstellung eines derartigen Sicherheitsdokuments verwendet werden kann. Ausserdem betrifft die vorliegende Erfindung ein Verfahren zur Herstellung eines derartigen Sicherheitsdokuments sowie ein Verfahren zur Herstellung einer erfindungsgemässen Tasche aus transparentem Kunststoff.

### STAND DER TECHNIK

Kunststoffkarten zur Verwendung als Identifikationskarten, Mitgliederausweise, Führerausweise, Polizei- und Militärausweise oder Kreditkarten sind meist einschichtig oder mehrschichtig ausgebildet und bestehen beispielsweise aus Polycarbonat. Typischerweise ist eine derartige Kunststoffkarte mit einem Aufdruck in Form eines Thermodrucks oder Laserdrucks (z. B. Laserengraving) versehen. Im Fall von mehrschichtigen Kunststoffkarten verfügen diese üblicherweise über eine Kernkomponente, welche beidseitig mit Schichten aus Kunststoffbedeckt ist.

Insbesondere im Ausweisbereich geht der Trend in letzter Zeit zunehmend in Richtung zu Plastikkarten, wie sie bereits seit längerer Zeit im Zusammenhang mit Kreditkarten Anwendung finden. Ausweisdokumente, die bisher auf Papier ausgestellt wurden, wobei die personalisierenden Daten mittels Schreibmaschine, eines Matrixdruckers, etc. aufgeschrieben wurden und das Bild als Foto aufgeklebt wurde, werden vermehrt auf Plastikkarten umgestellt. Plastikkarten als Ausweiskarten existieren beispielsweise bereits in einigen Staaten für Führerscheine, persönliche Fahrausweise oder Identitätskarten etc. Als Sicherheitsmerkmale weisen solche Kunststoffkarten insbesondere Sicherheitsdrucke, Hologramme oder hologrammähnliche Kippbilder, deren Erscheinung sich in Abhängigkeit vom Blickwinkel sprunghaft ändert (u.a. unter dem Handelsnamen Kinegramm^{™} erhältlich) auf. Auch maschinenlesbare Codierungen, wie Magnetstreifen (wie bei Kreditkarten üblich), Chips, Transponder, oder Barcodes können vorhanden sein. Als zusätzliche Sicherheitskomponente, um eine ausreichende Fälschungssicherheit zu gewährleisten, wurden die Personalisierungsdaten von solchen Karten in relativ aufwendigen Verfahren aufgebracht, beispielsweise mittels Laserengraving, bei welchem mittels Laser eine mittlere Schicht der Karte beschrieben wird. Dazu muss eine derartige Schicht entsprechend aktiviert werden, d. h. dem Kunststoff müssen spezifische, über den Laser aktivierbare Komponenten beigemischt sein.

Obwohl bei Kunststoffkarten gegenüber einer Verwendung von Papier im Allgemeinen Vorbehalte bestehen, insbesondere aufgrund der Empfindlichkeit von Papier gegenüber Feuchtigkeit, wurden auch schon mehrschichtige Plastikkarten eingesetzt, bei welchen eine Trägerschicht aus Kunststoff mit mindestens einer Papierschicht versehen ist, insbesondere beidseitig mit Papierschichten, die mit der Kernkomponente aus Kunststoff verklebt sind. Diese Papierschichten sind im Vergleich zur Trägerschicht aus Kunststoff, die der Karte ihre Stabilität gibt, vergleichsweise dünn und dienen zum Aufbringen eines Aufdrucks. Diese Karten können dadurch in einfacherer Weise bedruckt werden, insbesondere mittels eines Tintenstrahldruckers. Nach dem Aufbringen des Drucks wird die Papierschicht und der auf ihr angeordnete Aufdruck häufig mittels einer Deckschicht abgedeckt, insbesondere einer kalt- oder heisslaminierten Folie, um den Aufdruck gegen Abnützung oder Entfernung zu schützen, wobei auf diese Deckfolie als Sicherheitsmerkmale auch ein Hologramm, ein Guillauchendruck usw. aufgebracht sein kann. Solche Karten wurden auch bereits als einfache Ausweiskarten eingesetzt, wenn keine besonders hohen Sicherheitsanforderungen gegeben sind, beispielsweise als Clubkarten oder dergleichen. Für Ausweiskarten mit hohen Sicherheitsstandards, insbesondere staatlichen Ausweisdokumenten, wurden solche Karten aufgrund der Fälschungsmöglichkeiten bisher als nicht geeignet angesehen.

Beispielsweise die GB 2129371 beschreibt eine Identitätskarte, welche dadurch hergestellt wird, dass Papier zwischen zwei mit einem wärmeaktivierbaren Kleber beschichtete Kunststofffolien eingelegt wird, und dieses Laminat anschliessend unter Einwirkung von Wärme verschmolzen wird. Problematisch bei derartigen Identitätskarten ist dabei die Tatsache, dass wärmeaktivierbare Kleber, wenn sie an die eigentliche Aussenschicht aus transparentem Kunststoff grenzen, spätestens nach dem Laminationsprozess zu einer Trübung des gesamten Verbundes Anlass geben. Dies ist unerwünscht. Ausserdem lassen sich bei derartigen Mehrschichtstrukturen die heute erforderlichen Werte für Steifigkeit nicht erreichen. Zudem besteht bei intensivem Gebrauch die Gefahr, dass sich die unterschiedlichen Schichten wieder voneinander trennen, und es besteht der Nachteil, dass derartige Laminate auch von Fälschern leicht aufgetrennt und entsprechend mit anderen Inlays versehen werden können.

US 3 601 913 zeigt auch eine solche Identitätskarte.

### DARSTELLUNG DER ERFINDUNG

Der Erfindung liegt demnach die Aufgabe zugrunde, ein neuartiges Sicherheitsdokument, insbesondere zur Verwendung als Identifikationskarte, Kreditkarte, Führerausweis, Polizei- und Militärausweis oder Mitgliederausweis o.ä., vorzuschlagen, welches einfach und kostengünstig hergestellt werden kann, und gleichzeitig eine hohe Sicherheit aufweist. Dies im Zusammenhang mit Sicherheitsdokumenten mit wenigstens einer Papierlage, welche beidseitig von jeweils einer transparenten Kunststoffschicht bedeckt ist.

Die Lösung dieser Aufgabe wird durch die Merkmale des Anspruchs 1 erreicht.

Der Kern der Erfindung besteht somit zunächst darin, auf der einen Seite die aus dem Bereich der Sicherheitspapiere (Banknoten, Schecks, Aktiendokumente etc.) wohlbekannte Technologie der Sicherheitsmerkmale für Papiere direkt für den Bereich von Sicherheitsdokumenten im Sinne von Plastikkarten einsetzen zu können. Traditionell handelt es sich bei diesen beiden Bereichen (Sicherheitspapiere vs. Plastikkarten) um unterschiedliche Bereiche, in welchen nahezu jeweils eine eigene Technologie der Sicherheitsmerkmale existiert. Eine einfache und kostengünstige Herstellung eines erfindungsgemässen Sicherheitsdokuments wird dadurch zur Verfügung gestellt, indem ein Sicherheitspapier mit entsprechenden Sicherheitsmerkmalen durch ein Einschmelzen in eine thermoplastische Matrix gewissermassen zu einer Plastikkarte umgewandelt wird. Diese thermoplastische Matrix übernimmt einerseits die Schutzfunktionen für die Papierlage(n), welche eingebettet ist (sind), und auf der anderen Seite wird durch diese Matrix auch die üblicherweise erforderliche Steifigkeit gewährleistet. Auf einen weiteren zentralen Kunststoffträger kann so verzichtet werden. Diese Matrix oder transparente Hülle verfügt ausserdem im Randbereich über eine Zone, bei welcher wenigstens abschnittsweise keine Papierlage vorhanden ist. In diesem Bereich ist mit anderen Worten diese transparente Hülle oder Kunststoffschicht über die ganze Dicke der Karte ausgebildet. Ohne Belassung eines derartigen Randbereiches kann ein von Kunststoffschichten umgebenes Sicherheitsdokument gewissermassen in der Mitte aufgetrennt werden, indem die Papierlage mittig parallel zur Papierebene unter Aufbrechen der inneren Kohäsion der Papierlage geschlitzt wird. Dies ist ohne geschlossenen Kantenbereich insbesondere deshalb leicht möglicht, da die aufgebrachten Kunststoffschichten wie Hebel wirken und so bei der kleinsten Belastung eine Spaltung der Papierschicht möglich ist. Insbesondere bei beschichteten, fein gemahlenen Papieren mit feinen Fasern (z. B. Ink-Jet Papiere sind üblicherweise derartige Papiere) ist eine solche Spaltung leicht möglich. Die Papierspaltung ist durch derartige erfindungsgemässe verschmolzene Randbereiche und das Verschmelzen des Substrates (Sicherheitspapiers) mit dem Kunststoff kaum noch möglich. Dadurch erhöht sich die Sicherheit massiv. Beim Sicherheitsdokument kann es sich beispielsweise um eine Kreditkarte, um eine Identifikationskarte oder um einen Mitgliederausweis handeln.

Wesentlich an der hier vorgeschlagenen Lösung ist ausserdem, dass grundsätzlich auf die Verwendung von Adhäsiven respektive Haftvermittlern zur Erzeugung einer Haftung zwischen der Kunststoffschicht und der Papierlage respektive zwischen den Kunststoffschichten (im Randbereich) verzichtet wird. Es zeigt sich nämlich, dass sich Papierschichten und thermoplastische Kunststoffschichten trotz deren sehr unterschiedlichen chemischen Verhaltens (technischer Thermoplast vs. Zellulose) teilweise miteinander verschmelzen lassen, wobei gewissermassen die Papierschicht im Kunststoff eingebettet wird.

Eigentlich handelt es sich mit anderen Worten nicht um einen Laminierprozess, sondern vielmehr um einen Fusionsprozess oder ein Einschmelzen, denn eine Schichtstruktur kann in dieser Matrix insbesondere dann, wenn die gleichen Polymere auf beiden Seiten des Sicherheitspapiers eingesetzt werden, nicht mehr ausgemacht werden.

Ganz besonders erwähnenswert in diesem Zusammenhang ist die Tatsache, dass selbst Polymere ohne eigentlichen Schmelzpunkt, wie z. B. Polycarbonat, PVC oder hochamorphe Polyamide bei Erwärmung über deren Glasübergangspunkt und unter Anwendung von Druck eine solche Laminatstruktur ergeben. In einer bevorzugten Anwendungsform kommt daher auch Polycarbonat (Makrofol ID 6-2 oder Makrolon PC 2250 von Bayer, DE; alternativ Lexan ML 3729 von General Electric, US) zum Einsatz, während in einer anderen bevorzugten Anwendungsform ein PVC (z.B. Pentaprint PR M278/04 von Klöckner Pentaplast GmbH & Co KG, DE) hochamorphes Polyamid (z. B. Grilon oder Grilamid TR90 von Ems Grivory, CH) zur Anwendung kommt.

Die Verwendung von Adhäsiven, sei es in Form von wärmeaktivierbaren Klebern oder anderen Systemen, wie nach dem Stand der Technik bekannt, führt nämlich zu einer Vielzahl von Problemen. So treten beispielsweise typischerweise bei der Verwendung von Kunststoffschichten, welche auf der dem Papier zugewandten Seite über eine Kleberschicht verfügen, nach dem Laminationsprozess in der transparenten Schicht Trübungen auf, welche vermutlich auf die zwischen Kleberschicht und

Kunststoffschicht (Folien) veränderte Grenzfläche zurückzuführen sind. Dies ist im vorliegenden Fall nicht möglich, da auf Grund der bevorzugt identischen Kunststoffschichten beim Laminationsprozess ein homogener Kunststoffblock entsteht, an welchem derartige Grenzflächeneffekte gar nicht auftreten können.

Der Verzicht auf Adhäsive hat aber vor allem auch sicherheitstechnische Folgen. Werden nämlich Kunststoffschichten verwendet, welche Haftvermittler resp. Adhäsive aufweisen, so entstehen naturgemäss Schichtstrukturen, wobei die verschiedenen Schichten (Adhäsiv, Kunststoffschicht) unterschiedliche physikalische und chemische Eigenschaften aufweisen. Diese unterschiedlichen Eigenschaften können dazu verwendet werden, diese Schichten voneinander zu trennen.

Verwendet man beispielsweise einen normalen wärmeaktivierbaren Kleber, so verfügt dieser typischerweise über einen Schmelzpunkt oder Glasübergangspunkt, welcher vergleichsweise niedrig liegt, so typischerweise im Bereich von 90 °C bis 120 °C. Daneben befindet sich aber eine Kunststoffschicht mit normalerweise wesentlich darüber liegendem Schmelzpunkt respektive Glasübergangspunkt von z. B. mehr als 140 °C. Dieser Unterschied kann von Fälschern ausgenützt werden, um die Schichtstruktur aufzutrennen, wobei dies ohne Zurücklassung eines irreversiblen Schadens an den Kunststoffschichten geschehen kann. Entsprechend kann die Einbettung eines Papiers zwischen zwei Kunststoffschichten wobei wenigstens eine auf der Innenseite über eine Kleberschicht verfügt, einfach aufgetrennt werden und Fälschungen können nur beschränkt verhindert werden.

Im Gegensatz dazu werden im vorliegenden Fall bevorzugt ausschliesslich Kunststoffschichten verwendet, welche eine Fliesstemperatur resp. Schmelztemperatur respektive Glasübergangstemperatur besitzen, welche oberhalb von 120° C, bevorzugt oberhalb von 140° C und insbesondere bevorzugt in einem Bereich zwischen 150 °C und 180 °C liegt. Beim Laminations- oder Fusionsprozess bildet sich entsprechend ein im Wesentlichen chemisch und physikalisch homogener Block aus Kunststoff, welcher keine Schichtstruktur mehr aufweist, welche anschliessend zur Auftrennung von Fälschern genutzt werden könnte.

Zudem ergibt sich der Vorteil, dass bei der Verwendung ausschliesslich derartiger Kunststoffschichten mit hoher Fliesstemperatur bei den erforderlichen Herstellungsbedingungen das Papier wesentlich tiefer in die Kunststoffschichten eingebettet wird. Dabei findet eine Penetration der thermoplastischen Kunststoffmasse in das Papier statt, wobei eine äusserst stabile und innige Verbindung zwischen Papierschicht und Kunststoffschicht entsteht, welche ein nachträgliches Trennen von Papier und Kunststoff oder Zerstörung der Papierstruktur so gut wie verunmöglicht. Zudem entsteht eine Karte mit einer Steifigkeit, die heutigen normierten Anforderungen an Karten gerecht wird, und wie sie bei der Verwendung von Haftvermittlern nicht möglich ist.

Die bei der Verwendung von Adhäsiven zudem häufig auftretende Probleme einer Delaminierung bei intensivem Gebrauch kann ausserdem vollständig vermieden werden, was einerseits auf die stärkere Verbindung zwischen Kunststoff und Papier zurückzuführen ist, und andererseits auf die Tatsache, dass die Kunststoffschicht nicht aus unterschiedlichen Materialien besteht. Bei der Verwendung von Adhäsiven respektive Kleberschichten wird das Papier nur in die meist sehr dünnen Kleberschichten eingebettet, was wiederum die Sicherheit vor Fälschungen reduziert.

Dies sind gewissermassen die Vorteile, welche sich aus der Kombination von Kunststofffolien und einem Sicherheitspapier ergeben. Im vorliegenden Fall kommt nun aber noch hinzu, dass in wenigstens einer der Kunststoffschichten ein zusätzliches Sicherheitsmerkmal vorhanden ist. Dies führt zu einer enormen Erhöhung der möglichen Sicherheit bei derartigen Sicherheitskarten. Werden nämlich Taschen mit Kunststoffschichten zur Einbettung des Sicherheitspapiers verwendet, welche kein Sicherheitsmerkmal enthalten, so lastet gewissermassen die gesamte Sicherheits-Verantwortung auf dem Sicherheitspapier. Ist ein Fälscher in der Lage, ein Sicherheitspapier entweder zu beschaffen oder nachzubilden, kann auch eine entsprechend daraus gefertigte Sicherheitskarte leicht nachgebildet und gefälscht werden. Ganz anders im vorliegenden Fall. Hier wird nun zusätzlich die Tasche, in welche das Sicherheitspapier eingebettet wird, mit wenigstens einem Sicherheitsmerkmal versehen. Dies führt dazu, dass einerseits zwei unterschiedliche Produkte mit jeweils hohem Sicherheitsstandard auf separatem Weg dem Endbenutzer (Kartenaussteller) zugeführt werden können (Tasche mit Sicherheitsmerkmal respektive Papier mit Sicherheitsmerkmal). Somit müssten von einem Fälscher zur Nachbildung einer derartigen Sicherheitskarte beide Komponenten beschafft oder nachgebaut werden, da sie jeweils mit Sicherheitsmerkmalen ausgestattet sind. Die Kombination von Sicherheitsmerkmalen der Tasche wie auch des Papiers führt somit nicht nur zur erhöhten Sicherheit des Endprodukts sondern erlaubt auch die erhöhte Sicherheit bei der Zuführung der Ausgangsmaterialien und der Herstellung.

Die Sicherheitsmerkmal(e) der Kunststoffschichten können dabei in der Kunststoffschicht eingebettet sein. In diesem Fall wird eine entsprechende Tasche bei einem Hersteller bereits mit dem zugehörigen Sicherheitsmerkmal produziert. Alternativ oder zusätzlich ist es möglich, in der Form, mit welcher die Sicherheitskarte laminiert wird, Strukturen vorzusehen, welche erst beim Laminationsprozess zur Ausbildung von Sicherheitsmerkmalen der Oberfläche führen. Eine Kombination von sowohl in der Tasche eingebetteten Sicherheitsmerkmalen mit derartigen erst beim Endbenutzer hergestellten Sicherheitsmerkmalen führt zu einer weiteren signifikanten Erhöhung der möglichen Sicherheit, da sowohl das spezifische Papier, als auch die spezifische Tasche, als auch der spezifische Laminator vorliegen muss, um eine identische Karte herzustellen.

Gemäss einer ersten bevorzugten Ausführungsform der vorliegenden Erfindung bestehen die einzelnen Kunststoffschichten, welche, wie bereits erwähnt, ohne weitere Zuhilfenahme von Haftvermittlern wie Adhäsiven zu einer Hülle verschmolzen sind, aus einem und demselben thermoplastischen Material. Mit anderen Worten wird bevorzugt die Tasche als einziger, insbesondere bevorzugt bereits vor dessen Verschmelzung als zusammenhängende Einheit vorliegender Block aus einem einheitlichen Material gebildet.

Beim ersten Sicherheitsmerkmal, d. h. beim wenigstens einen Sicherheitsmerkmal in der Papierlage, kann es sich grundsätzlich um Sicherheitsmerkmale aus dem Bereich der Sicherheitspapiere handeln. Mit anderen Worten kommen beispielsweise in Frage: Wasserzeichen in der Papierlage, wobei Porträt-Wasserzeichen (Graustufen, Multiton), Barcode-Wasserzeichen, Electrotype-Wasserzeichen (filigranes scharfkantiges Wasserzeichen), sowie helle und/oder dunkle Wasserzeichen verwendet werden können, in der Papierlage wenigstens teilweise oder abschnittsweise eingebettete Sicherheitselemente wie insbesondere Sicherheitsstreifen (diese können im sogenannten Windows-Verfahren eingebettet sein, d. h. bereichsweise an der Oberfläche des Papiers freiliegen), Inkjetgraphiken, OCR-Zeilen, Sicherheitsdrucke (auch irisierende, Diffraktion), OVI (optically variable inks, Mischung aus irisierenden Effekten und Farbwechsel, d.h. inkl. Absorptionsanteil), Stahlstich (Intaglio), UV-Druck, Durchsichtregister und Guillochen (im Sicherheits-Offset), Microtext, Mikroperforation (z. B. mit Laser hergestellt), Barcodes, 2D-Barcode, farbige 2D-Barcodes (z.B. ColorCode^{™}), chemische Sicherheiten (z. B. farbige Reaktion im Papier auf Lösungsmittel, Bleichmittel, Säuren und Laugen) oder Melierfasern (UV oder Vis), Planchetten etc., auf der Papierlage aufgebrachte Magnetstreifen oder Chips, RFIDs, auf der Papierlage aufgebrachte Sicherheitsdrucke, insbesondere in Form eines fluoreszierenden Aufdruckes (ggf. mit linear-polarisierenden Eigenschaften in Absorption und/oder Emission). Möglich sind ganz allgemein so genannte OVD's, d.h. optical variable devices, wie z.B. Hologramme oder Kippbilder (z.B. Kinegram™), welche als Folien in Form von Patches oder Streifen aufgebracht sein können. Ausserdem Sicherheitsstreifen mit zusätzlichen Merkmalen wie Sicherheitsschriften, fluoreszierende Aufdrucke oder Beschichtungen etc. Selbstverständlich können auch Kombinationen dieser genannten Sicherheitsmerkmale verwendet werden. Auch möglich sind Taggants (z.B. als up-converter, in Frage kommt u.a. Anti-Stokes unter Verwendung von z.B. LUMILUX Grün UC-2 von Honeywell), irisierende Beschichtungen oder Aufdrucke, Mikro- resp. Nanoaufdrucke.

Auf der anderen Seite handelt es sich gemäss einer bevorzugten Ausführungsform des erfindungsgemässen Sicherheitsdokuments beim Sicherheitsmerkmal der Kunststoffschicht um ein auf, unter oder in der Kunststoffschicht angeordnetes, beispielsweise in dieses integriertes Sicherheitsmerkmal. Werden Sicherheitsmerkmale in die Kunststoffschichten integriert, welche dem Druck respektive der Temperatur bei der Herstellung nicht sicher standhalten (zum Beispiel Chips, RFID's, etc.), so können diese entweder nach dem Herstellungsprozess der Kunststoffschichten in entsprechende Aussparungen eingelegt respektive darin befestigt werden, es ist aber auch möglich, derartige Sicherheitsmerkmale in Aussparungen des Papiers vor dem Laminieren einzulegen. Alternativ oder zusätzlich ist es, wie bereits erwähnt, möglich, das Sicherheitsmerkmal aus der Kunststoffschicht selber, insbesondere in Form eines taktilen, aussenseitig angeordneten Sicherheitsmerkmals auszubilden. Dies geschieht bevorzugt, indem eine derartige Sicherheitskarte in einem Laminator mit strukturierter Oberfläche stattfindet, d. h. in welchem beim Laminationsprozess unter erhöhtem Druck und/oder Temperatur in der Oberfläche eine dreidimensionale Struktur geprägt wird (embossing).

Grundsätzlich kann es sich bei den Sicherheitsmerkmalen der Kunststoffschicht(en) um wenigstens eines der ausgewählt aus der folgenden Gruppe handeln: Sicherheitsstreifen, Melierfasern, Magnetstreifen, OVD, RFID, Chip, Sicherheitsdruck, Planchetten, Diffraktionsgitter, Folie, Hologramm (auch Kippbilder); wobei dieses Sicherheitsmerkmal in der Matrix der Kunststoffschicht oder an der Oberfläche der Kunststoffschicht angeordnet oder im Fall eines Diffraktionsgitters aus dem (Oberflächen-)Material der Kunststoffschichten gebildet sein kann. Das Sicherheitsmerkmal kann dabei bevorzugt fluoreszierende Eigenschaften aufweisen, wobei es insbesondere bevorzugt linear polarisierte Absorption und/oder linear polarisierte Emission zeigt.

Ebenfalls möglich auf der Oberfläche der Kunststoffschichten sind Unterschriftsfelder. Derartige Felder können einfach ausgebildet sein, oder können aus Materialien gefertigt sein, welche durch Anlegen von Wärme gelöscht werden können (so genannte Thermo-Rewrite-Felder). Zur besseren Lesbarkeit werden übrigens auch Magnetstreifen an der aussenseitigen Oberfläche der Kunststoffschichten vorgesehen.

Es ist übrigens auch möglich, neben den Sicherheitsmerkmalen im Papier und in der Tasche weitere separate Sicherheitsmerkmale vorzusehen, welche erst in respektive auf die Tasche kurz vor dem Laminationsprozess aufgelegt werden, und anschliessend mit der Karte verschmolzen werden. So kann eine weitere Sicherheitsstufe erreicht werden, da ein viertes Element der Sicherheit hinzukommt (1. Papier mit Sicherheitselement; 2. Tasche mit Sicherheitselement; 3. Laminator mit spezifischer Prägestruktur; 4. separates Sicherheitselement).

Gemäss einer weiteren bevorzugten Ausführungsform des erfindungsgemässen Sicherheitsdokuments handelt es sich beim thermoplastischen Material um vorzugsweise (hoch)transparentes thermoplastisches Polycarbonat (PC), oder aber auch themoplastisches transparentes Polyamid, Polyester, Polyethylenterephthalat (PET), Polybutylenterephthalat (PBT), Polyvinylchlorid (PVC), Polymethylmethacrylat (PMMA), Acrylnitril-Butadien-Styrol-Copolymere (ABS), Polyethylen (PE) oder Polypropylen (PP) oder Mischungen respektive unterschiedliche Lagen davon. Typischerweise weisen die Kunststoffschichten auf jeder Seite der Papierlage zusammen mit der Papierlage eine Dicke (gesamte Kartendicke) auf, welche bei mindestens 0.5 mm bis vorzugsweise mindestens 0.7 mm liegt. So kommen z. B. Kunststoffschichten von ca. 100 - 200 oder sogar 300 µm auf jeder Seite in Frage, und Papierschichten von ca. 200 - 500 µm Dicke.

Bei einem derartigen Sicherheitsdokument verbleibt im Randbereich wenigstens abschnittsweise eine transparente Zone. Um die Dicke des Papiers auszugleichen, ist es gemäss einer anderen bevorzugten Ausführungsform der Erfindung möglich, das Dokument so auszugestalten, dass die Papierlage eine etwas geringere Grösse als die sie beidseitig umgebenden Kunststoffschichten aufweist, sodass am Rand wenigstens abschnittsweise ein transparenter Randbereich verbleibt, und die Tasche insbesonders derart ausgelegt ist, dass die zugeschnittene Papierlage an einer definierten Position eingelegt respektive eingepasst ist. Da ein derartiger abschnittsweiser transparenter Randbereich u. U. die optischen Anforderungen an eine Plastikkarte nicht erfüllt, ist es möglich, diesen Randbereich spezifisch einzufärben.

Eine weitere bevorzugte Ausführungsform der vorliegenden Erfindung, welche insbesondere im Zusammenhang mit Sicherheitsstreifen oder Wasserzeichen besonders interessant ist, und ausserdem eine spezielle Form der Sicherheit, wie sie im Bereich der üblichen Kreditkarten oder Identitätskarten, welche ausschliesslich aus Kunststoff gefertigt sind, so nicht bekannt ist, zur Verfügung stellen kann, wird dadurch erreicht, dass die Papierlage derart ausgebildet wird, dass das Sicherheitsdokument wenigstens in Durchsicht gegen eine Lichtquelle teilweise durchscheinend ist. Plastikkarten wie beispielsweise Kreditkarten nach dem Stand der Technik sind nämlich normalerweise nicht durchscheinend ausgebildet und entsprechend befinden sich auch keine in Bezug auf die Transparenz der Karte spezifische Sicherheitsmerkmale in solchen Plastikkarten. Auch Sicherheitsmerkmale in der Tasche können auf derartige Transparenz ausgelegt werden. Es können beispielsweise Aussparungen in der Papierlagen vorgesehen werden, und in diesen Aussparungen in der Tasche, d. h. in der Kunststoffschicht spezielle Sicherheitsmerkmale angeordnet werden. So beispielsweise Fresnel-Linsen, oder andere diffraktive Strukturen wie beispielsweise Hologramme. Insbesondere können in derartigen Bereichen Transmissions-Hologramme angeordnet werden, welche bis anhin im Bereich der Sicherheitskarten keine Verwendung gefunden haben.

Eine weitere bevorzugte Ausführungsform der vorliegenden Erfindung ist dadurch gekennzeichnet, dass die Papierlage wenigstens einseitig einen insbesondere mittels eines Tintenstrahldruckers aufgebrachten Aufdruck insbesondere in Form eines Fotos und/oder Personalien aufweist. Diese einfache Möglichkeit der Personalisierung eines derartigen Sicherheitsdokuments macht seine Herstellung besonders einfach und kostengünstig. Typischerweise werden entsprechend für die Papierlage Sicherheitspapiere verwendet, welche bereits eine Beschichtung aufweisen, die diese Sicherheitspapiere für eine Bedruckung mit einem Tintenstrahldrucker geeignet machen. Dabei sollte darauf geachtet werden, dass die verwendeten Tinten im Zusammenspiel mit der Beschichtung derart ausgebildet sind, dass sie beim Herstellungsprozess der Karte (Aufschmelzen der Kunststoffschichten) keine negativen Effekte wie beispielsweise ein Verlaufen, Verschmieren etc. zeigen. Tinte dringt beim Drucken tief in das Papier resp. die Beschichtung ein, und da üblicherweise Ink-Jet Papiere, wie bereits weiter oben erwähnt, leicht aufbrechen (Papierspaltung), ergibt sich durch die Verwendung von Tintenstrahltechnologie eine weitere Erhöhung der Sicherheit.

Weitere bevorzugte Ausführungsformen des erfindungsgemässen Sicherheitsdokuments sind in den abhängigen Ansprüchen beschrieben. Weiterhin betrifft die vorliegende Erfindung eine Tasche zur Herstellung eines Sicherheitsdokuments, wie es oben beschrieben wurde. Eine derartige Tasche verfügt über wenigstens eine obere Schicht sowie wenigstens eine untere Schicht aus thermoplastischem Material, wobei die beiden Schichten an wenigstens einer der Kanten über wenigstens einen Verbindungsbereich verbunden sind, und wobei bevorzugt die gesamte Tasche aus einem einzigen thermoplastischen Material, insbesondere bevorzugt aus Polycarbonat, ausgebildet ist. Der Verbindungsbereich kann dabei einerseits beweglich ausgebildet Werden, so dass, wenn beispielsweise ein Verbindungsbereich nur an einer Kante angeordnet ist, die Tasche zum Einlegen des Papiers vollständig aufgeklappt werden kann. Alternativ ist es möglich, den Verbindungsbereich starr auszubilden, sodass die beiden Kunststoffschichten nur teilweise geöffnet und das Papier eingeschoben werden kann. In diesem Fall ist es auch möglich, den Verbindungsbereich an 3 der Kanten des Sicherheitsdokuments anzuordnen, insbesondere bevorzugt derart, dass sich der Verbindungsbereich den gesamten Kanten entlang erstreckt.

Um sicherzustellen, dass die Papierlage(n) in der Tasche am richtigen Ort positioniert ist, werden bevorzugt in der Tasche respektive auf oder an der Tasche Mittel vorgesehen, welche eine exakte Positionierung der einzulegenden Papierlage erlauben. Es kann sich dabei um Vertiefungen, Rillen oder andere Mittel handeln, welche die Papierlage sowohl beim Einlegen vereinfacht positionieren lassen, als auch diese Papierlagen beim Laminieren in der richtigen Position bewahren.

Weiterhin bevorzugt kann eine derartige Tasche an wenigstens einer der nicht verbundenen Kanten der Schichten Hilfsmittel zur Fixierung der Schichten bis zur Verschmelzung aufweisen. So kann nach dem Einlegen der Papierlage die Hülle gewissermassen geschlossen werden. Bei diesen Hilfsmitteln kann es sich insbesondere bevorzugt um Nut/Feder-Konstruktionen, Rillen Rippen, Klickmechanismen etc. handeln.

Weitere bevorzugte Ausführungsformen der erfindungsgemässen Tasche sind in den abhängigen Ansprüchen beschrieben.

Des Weiteren betrifft die vorliegende Erfindung ein Verfahren zur Herstellung eines Sicherheitsdokumentes, wie es oben beschrieben ist. Das Verfahren zeichnet sich dabei dadurch aus, dass die wenigstens eine Papierlage (es handelt sich dabei üblicherweise um ein Sicherheitspapier) nach deren Personalisierung, insbesondere unter Zuhilfenahme eines Tintenstrahldruckers, in eine Tasche, insbesondere bevorzugt in eine Tasche, wie sie oben beschrieben wurde, eingelegt wird, und diese Schichtstruktur ohne weitere Zuhilfenahme von Haftvermittlern wie Adhäsiven unter Anwendung von Druck und/oder erhöhter Temperatur zu einer transparenten, im wesentlichen die Papierlage allseitig umschliessenden Hülle verschmolzen wird. Dabei entstehen im Randbereich Zonen, in welchen die Kunststofflagen über die ganze Dicke der Karte miteinander verschmolzen sind. Die Tasche ist bevorzugt aus Polycarbonat, PVC oder aus vorzugsweise hochamporphen Polyamiden hergestellt.

Es erweist sich als vorteilhaft, zum Verschmelzen eine Kombination von erhöhter Temperatur von im Bereich unterhalb der Glasübergangstemperatur des verwendeten Kunststoffs, und Druck von mehr als 10⁶ Pa (z.B. im Bereich von 1.5x10⁶ Pa) zu verwenden, wobei insbesondere bevorzugt ein spezifisches Profil für Druck und Temperatur gefahren wird. So beispielsweise indem in einem Laminator zunächst die Temperatur im Fall von Polycarbonat auf im Bereich von ca. 150 bis 160 Grad Celsius gefahren wird, indem anschliessend der Druck auf im Bereich von 1.4x10⁶ Pa erhöht wird, dann die Temperatur auf ca. 110 bis 120 Grad Celsius erniedrigt wird, und dann nochmals der Druck etwas auf im Bereich von 1.5x10⁶ Pa oder sogar 1.57x10⁶ Pa erhöht wird.

Gemäss einer ersten bevorzugten Ausführungsform des Verfahrens findet die Verschmelzung in einer Form statt, welche dem Sicherheitsdokument an der Oberfläche bei dessen Verschmelzung wenigstens ein Sicherheitsmerkmal aufprägt (embossing). Es handelt sich bei diesem Sicherheitsmerkmal bevorzugt um ein taktiles (durch Berührung verifizierbares) Sicherheitsmerkmal und/oder ein optisches Gitter, wie insbesondere bevorzugt eine Fresnel-Linse.

Wie bereits weiter oben erwähnt ist es auch möglich, zur weiteren Erhöhung der Sicherheit, vor dem Verschmelzen neben der Papierlage wenigstens ein weiteres Sicherheitsmerkmal zwischen Papierlage und Kunststoffschichten, oder in Aussparungen in der Papierlage einzulegen, oder dieses zwischen Kunststoffschichten und Laminierform zu positionieren. Zu diesem Zweck werden bevorzugt in den Kunststoffschichten Mittel insbesondere in Form von Vertiefungen, oder ähnlichem vorgesehen, welche eine genaue und möglichst unverrückbare Positionierung dieser zusätzlichen Sicherheitsmerkmale erlaubt.

Weitere bevorzugte Ausführungsformen des Verfahrens zur Herstellung eines Sicherheitsdokuments sind in den abhängigen Ansprüchen beschrieben.

Weiterhin betrifft die vorliegende Erfindung ein Verfahren zur Herstellung einer Tasche, wie sie oben beschrieben wurde, d. h. zur Herstellung eines derartigen Sicherheitsdokuments. Das Verfahren ist dadurch gekennzeichnet, dass in einem Urform-Verfahren, insbesondere in einem RIM-Verfahren (Rapid Injection Molding) die Tasche ausgehend von einem Granulat beispielsweise aus Polycarbonaten oder PVC ausgebildet wird, wobei wenigstens ein Sicherheitsmerkmal in der Form derart vorgesehen ist, dass dieses anschliessend in und/oder auf und/oder in der Tasche fixiert ist. Bei einem derartigen Herstellungsverfahren wird bevorzugt die Tasche aus Polycarbonat- oder PVC Granulat bei einer Temperatur im Bereich von 300 - 400°C und einem Druck im Bereich von 200 - 300 bar innerhalb von 5-10 Sekunden hergestellt. Mögliche Granulate sind beispielsweise unter den Handelsnamen Makrolon (Bayer, DE) oder Lexan (General Electric, US) erhältlich.

Weiterhin betrifft die vorliegende Erfindung eine Verwendung eines erfindungsgemässen Sicherheitsdokuments als Karte zur Identifikation und/oder Authentifikation des Trägers mit ggf. anschliessender Zugangs- resp. Bezugsberechtigungsvergabe, insbesondere, als Personalausweis, Kreditkarte, Identifikationskarte, Zugangsberechtigungskarte oder als Mitgliederausweis.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:

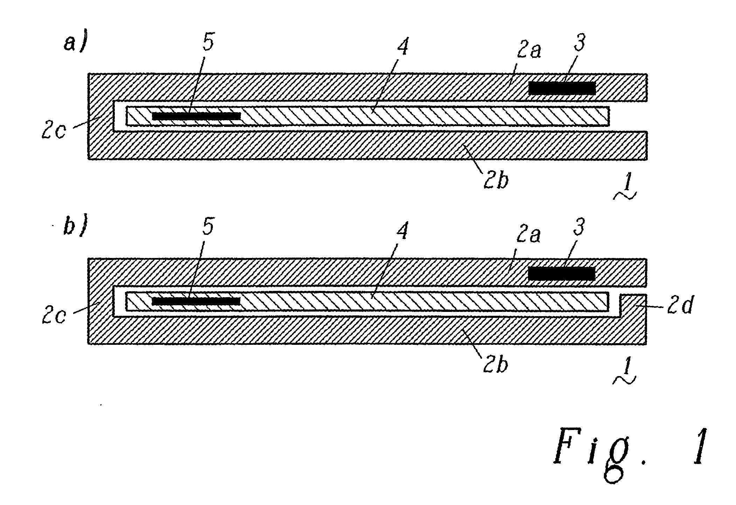

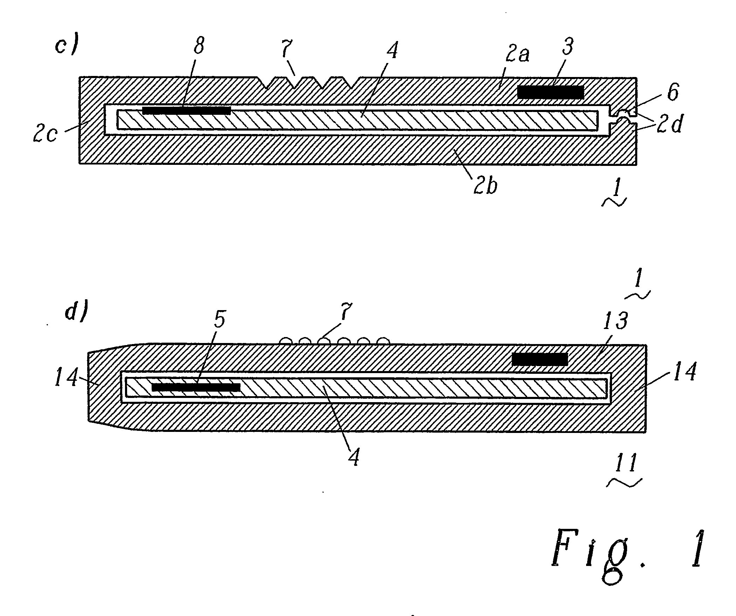

- Fig. 1: Schnitte durch erfindungsgemässe Sicherheitsdokumente unmittelbar vor respektive nach deren Verschmelzung zu einem Sicherheitsdokument, wobei a) einen Schnitt durch ein Sicherheitsdokument mit eingelegter Papierlagen vor dessen Verschmelzung mit eingebettetem Sicherheitselement sowohl in der Papierlagen als auch in einer der Kunststoffschichten darstellt, b) einen Schnitt gemäss Fig. 1a) darstellt, wobei hier zusätzlich auf der dem Verbindungsbereich der beiden Deckschichten abgewandten Seite eine öffnungsseitige Justierhilfe resp. eine Rahmenkante vorgesehen ist; c) einen Schnitt gemäss Fig. 1b) zeigt, wobei zusätzlich an der Oberfläche ein taktiles Sicherheitsmerkmal vorgesehen ist, sowie Mittel zur öffnungsseitigen Fixierung der Tasche, sowie d) einen Schnitt durch ein fertiges, d. h. verschmolzenes Sicherheitsdokument;
- Fig. 2: eine Aufsicht auf eine geöffnete Tasche oder eingelegtes Sicherheitspapier, wobei erkennbar ist, wie die beiden Kunststoffschichten über Verbindungsbereiche verbunden sind; und
- Fig. 3: Aufsichten auf erfindungsgemässe Sicherheitsdokumente, wobei in a) eine Karte mit umlaufendem Rand dargestellt ist und in b) eine Karte mit gezahntem Rand.

### WEGE ZUR AUSFÜHRUNG DER ERFINDUNG

Fig. 1 zeigt verschiedene Ausführungsbeispiele, wobei die Figuren 1 a) bis c) jeweils Schnitte durch unfertige Identifikationskarten zeigen, welche noch nicht verschmolzen sind.

Fig. 1a) zeigt das einfachste Ausführungsbeispiel. Eine Papierlage 4 wird zwischen zwei transparente Schichten 2a und 2b einer Tasche 2 gelegt. Die beiden Kunststoffschichten 2a und 2b sind an einer Kante über einen Verbindungsbereich 2c unter Bildung der Tasche 2 verbunden. Der Verbindungsbereich 2c kann dabei nur an einer Kante vorhanden sein, so dass sich die Tasche 2 gewissermassen wie ein Buch öffnen lässt, es ist aber auch möglich, die beiden Schichten 2a und 2b an zwei oder drei Kanten über Verbindungsbereiche, welche miteinander verbunden sind, zu schliessen, so dass die Papierlage 4, welche über ein Sicherheitselement 5 verfügt, beispielsweise nur noch von einer Seite eingeschoben werden kann.

Die Tasche 2 ist aus einem einzigen Material hergestellt. Ausserdem verfügt die Tasche 2 über ein Sicherheitsmerkmal 3, welches in eine der Schichten 2a/2b oder einen Randbereich 2c/2d integriert ist. Es handelt sich beim Material der Tasche 2 vorzugsweise um Polycarbonat. Auch andere thermoplastische Kunststoffe sind aber denkbar und möglich, beispielsweise Polyethylen, Polypropylen, ABS oder ähnliche. Grundsätzlich muss es sich bei mehr Material der Tasche um einen thermoplastischen Werkstoff handeln, welcher ein Verschmelzen der Schichten bei Temperaturen respektive Drücken erlaubt, ohne dass die Papierlage 4 respektive in oder auf der Papierlage vorhandene Sicherheitselemente oder Aufdrucke beim Laminier- respektive Fusionsprozess Schaden nehmen. Ebenso wenig dürfen Sicherheitselemente, welche in der Tasche respektive auf der Tasche 2 vorgesehen sind, durch den Laminier- respektive Fusionsprozess Schaden nehmen. Typischerweise sollte mit anderen Worten die Glasübergangstemperatur des verwendeten Materials unterhalb von ca. 150 bis 180 oder 200°C liegen, d. h. Polycarbonat kann gerade noch verwendet werden. Ausserdem sollte selbstverständlich wenigstens eine der beiden Kunststoffschichten 2a oder 2b transparent sein, damit die auf der Papierlage 4 aufgebrachte Information respektive die in oder auf der Papierlage 4 angeordneten Sicherheitselemente nach dem Verschmelzen sichtbar bleiben. Mit anderen Worten muss nicht zwingend die Tasche vor dem Verschmelzen transparent sein, sondern vielmehr nach dem Verschmelzen zu einer die Papierlage umgebenden Hülle.

Im Rahmen der hier vorliegenden Ausführungsbeispiele wurde als Kunststoff für die Tasche Material von Bayer, DE verwendet, welches unter dem Makrolon PC 2250 in Form eines Granulats erhältlich ist. Dieses wurde in einem RIM-Verfahren zu einer Tasche geformt. In einem In-mold labelling-Verfahren wurde zusätzlich das Sicherheitsmerkmal 3 in die Tasche 2 integriert. Die Schichten 2a und 2b verfügen typischerweise Dicken von ca. 300 µm. Soll nämlich eine derartige Karte als Identitätskarte Verwendung finden, so muss die Karte internationalen Standards gerecht werden, im speziellen dem Standard ISO/IEC 7810, in welchem unter anderen festgeschrieben ist, dass die Dicke einer derartigen Identifikationskarte 0.76 Millimeter betragen muss, wobei die Toleranz im Bereich von +/- 0.08 mm liegt. Polycarbonat eignet sich in Bezug auf diesen genannten Standard auch insofern, als die geforderte Steifigkeit erfüllt werden kann (vgl. Kapitel 8.1.1 von ISO/IEC 7810).

Bei der Papierlage 4 handelt es sich um ein Sicherheitspapier mit wenigstens einem Sicherheitsmerkmal, bevorzugt einer Kombination von mehreren Sicherheitsmerkmalen. Die Papierlage 4 sollte mit einem Tintenstrahldrucker bedruckbar sein, d. h. sie sollte über Beschichtungen verfügen, welche die Aufnahmefähigkeit und Fixierung von derartigen Tinten auf dem Substrat ermöglicht. Konkret wurde im vorliegenden Fall ein Papier mit einem Strich, der unter dem Namen Digisafe von der Firma Landqart, CH, bekannt ist, verwendet. Das Papier verfügte über ein Flächengewicht von 90 g/m². Es zeigt sich ganz allgemein, dass das Papier für hohe Sicherheit möglichst so dünn sein sollte, dass die Tinte einen wesentlichen Teil der Papierdicke durchdringt und somit eine Papierspaltung erschwert wird. Auf der anderen Seite muss das Papier selbstverständlich aber immer noch dick genug sein, um die erforderliche Opazität und die erforderlichen Druckeigenschaften gewährleisten zu können.

Die Papierlage 4 verfügt im Beispiel gemäss Fig. 1a) resp. 1b) über ein Sicherheitsmerkmal in Form eines in die Papierlage eingebetteten Sicherheitselements 5. Es kann sich dabei z. B. um einen Sicherheitsstreifen handeln (z. B. ein mit einer metallischen Lage bedampfter Kunststoffstreifen, wobei gegebenenfalls zusätzlich fluoreszierende Farben eingebaut sein können), welcher entweder derart in die Papiermasse eingelassen ist, dass er an keiner Stelle an die Oberfläche der Papierlage 4 tritt, oder aber in Form eines so genannten "window"-Streifens (Fensterfaden), welcher abschnittsweise an die eine und/oder andere Oberfläche hervortritt. Derartige Sicherheitsstreifen sowie deren Einbettung in das Papier sind aus dem Bereich der Banknoten wohlbekannt. Ebenfalls in Frage kommen so genannte Melierfasern. Die Papierlage 4 kann auch über ein Sicherheitsmerkmal in Form eines aufgedruckten oder aufgeklebten Sicherheitselementes 8 verfügen. Dieses Sicherheitselement kann z. B. ein Sicherheitsaufdruck, wie aus dem Gebiet der Banknoten bekannt ist, sein. In Frage kommen entsprechend Intaglio-Druck, Drucke mit fluoreszierenden oder phosphoreszierenden Sicherheits-Tinten respektive Pigmenten, Mikrodrucke, Barcodes oder ähnliches. Alternativ oder zusätzlich als Sicherheitsmerkmale in Frage kommen z.B. Taggants, irisierende Drucke, Planchetten, Mikrodrucke etc..

Ebenfalls möglich als Sicherheitselemente 8 wie in Fig. 1c) dargestellt sind beispielsweise auf die Papierlage 4 aufgeklebte oder anderswie aufgebrachte Elemente wie Kinegramme, Hologramme, Chips, Magnetstreifen (diese können aber auch nachträglich aussen aufgebracht werden), RFID's (Radio frequency induced devices). Hier muss u. U. darauf geachtet werden, dass diese Sicherheitselemente beim Fusions- oder Laminierprozess nicht beschädigt werden, d. h. es müssen Kunststoffe verwendet werden, deren Glasübergangstemperaturen entsprechend niedrig liegen respektive welche sich unter entsprechend niedrigerem Druck verschmelzen lassen, deren Glasübergangstemperaturen aber immer noch höher liegen (typischerweise > 120 ° C) als jene gängiger Heisskleber, da ansonsten keine wirkliche Verschmelzung der Matrix erfolgen kann.

Zusätzlich zu diesen auf der Papierlage 4 aufgebrachten Sicherheitselementen lässt die Erfindung die Einbringung zusätzlicher Sicherheitselemente der Papierlage zu, welche zur Überprüfung oder zur fehlerfreien Funktion eines transparenten Substrates bedürfen.

Solche Sicherheitselemente sind beispielsweise polarisiert absorbierende und/oder emittierende Folien, dichroitische Spiegel, Farbfilter, UV-absorbierende Filter, Effektgitter, etc. und können auch in einer Aussparung der Papierlage eingebracht werden.

Als Sicherheitselement kann auch ein Wasserzeichen 10 in der Papierlage Anwendung finden. Dies ist ein besonders bevorzugtes Sicherheitselement im Zusammenhang mit der vorliegenden Erfindung, da es im Zusammenhang mit konventionellen Plastikkarten noch keine Verwendung findet, nur sehr schwierig nachzuahmen ist, und ein so genanntes "human-feature" darstellt, d. h. ein Sicherheitsmerkmal ist, welches direkt von Auge z. B. beim gegen das Licht halten ohne Zuhilfenahme spezieller Geräte verifiziert werden kann. Insbesondere bevorzugt handelt es sich beim Wasserzeichen 10 um ein so genanntes Graustufen-Wasserzeichen, wie es nur unter speziellen Bedingungen unter Verwendung spezieller Papiermaschinen hergestellt werden kann und aus dem Bereich der Sicherheitspapiere (insbesondere Banknoten) bekannt ist.

Wie bereits erwähnt verfügt gemäss der Erfindung auch die Tasche über wenigstens ein Sicherheitsmerkmal. Dieses kann beispielsweise eingebettet sein. Es kann sich dabei auch hier z. B. um einen Sicherheitsstreifen handeln (z. B. ein mit einer metallischen Lage bedampfter Kunststoffstreifen, wobei gegebenenfalls zusätzlich fluoreszierende Farben eingebaut sein können), welcher derart in die Kunststoffmasse eingelassen ist, dass er an keiner Stelle an die Oberfläche der Kunststoffschichten tritt. Ebenfalls in Frage kommen so genannte Melierfasern. Die Tasche 2 kann auch über ein Sicherheitsmerkmal in Form eines aufgedruckten oder aufgeklebten Sicherheitselementes 8 verfügen. Dieses Sicherheitselement kann z. B. ein Sicherheitsaufdruck sein. In Frage kommen entsprechend Intaglio-Druck, Drucke mit fluoreszierenden oder phosphoreszierenden Sicherheits-Tinten respektive Pigmenten, Mikrodrucke, Barcodes oder ähnliches. Alternativ oder zusätzlich als Sicherheitsmerkmale in Frage kommen z.B. Taggants, irisierende Drucke, Planchetten, Mikrodrucke etc..

Ebenfalls möglich als Sicherheitselemente für die Tasche 2 sind beispielsweise auf die Tasche 2 aufgeklebte, in diese integrierte oder anderswie aufgebrachte Elemente wie Kippbilder (z.B. Kinegram™), Hologramme, Chips, Magnetstreifen (diese können aber auch nachträglich aussen aufgebracht werden), RFID's (Radio frequency induced devices). Hier muss u. U. darauf geachtet werden, dass diese Sicherheitselemente beim Fusions- oder Laminierprozess, insbesondere aber auch bei der Herstellung einer derartigen Tasche in einem RIM-Verfahren, bei welchen typischerweise noch extremere Bedingungen herrschen, nicht beschädigt werden, d. h. es müssen Kunststoffe verwendet werden, deren Glasübergangstemperaturen entsprechend niedrig liegen respektive welche sich unter entsprechend niedrigerem Druck verschmelzen lassen, deren Glasübergangstemperaturen aber immer noch höher liegen (typischerweise > 120°C) als jene gängiger Heisskleber, da ansonsten keine wirkliche Verschmelzung der Matrix erfolgen kann.

Zusätzlich zu diesen oder alternativ lassen sich, wie in Fig. 1c) und in Fig. 1d) angegeben, auch dreidimensionale Sicherheitsmerkmale 7 vorsehen. Diese können entweder bereits vor der Verschmelzung vorliegen, dann muss aber sichergestellt werden, dass sie bei der Verschmelzung nicht vollständig entfernt werden.

Vorzugsweise werden derartige Sicherheitsmerkmale 7 erst in der Form, welche zum Verschmelzen verwendet wird, in einem oberflächlichen Prägeprozess hergestellt.

Fig. 1b zeigt eine Weiterbildung eines Ausführungsbeispiels gemäss Fig. 1a). Zur vereinfachten Positionierung der Papierlage (respektive ggf. der mehreren Papierlagen) ist eine Justierhilfe 2d vorgesehen. Diese kann in Form einer Rippe ausgebildet sein, welche die Papierlage 4 vor einem Verschieben in der Tasche 2 schützt. Typischerweise sind derartige Rippen an jenen Kanten vorgesehen, an welchen keine Verbindungsbereiche 2c vorgesehen sind.

Fig. 1c) zeigt ein weiteres Ausführungsbeispiel, bei welchem einerseits ein weiteres Sicherheitsmerkmal 7, in Form eines optischen Gitters oder eines taktilen Sicherheitsmerkmals an der Oberfläche der Tasche 2 vorgesehen ist. Weiterhin sind Mittel 6 vorgesehen, im konkreten Fall Nut und Feder, welche eine temporäre Fixierung der Tasche nach dem Einschieben der Papierlage 4 erlaubt.

Die Schichtstrukturen gemäss Fig. 1a) bis c) werden in einem Laminationsprozess zur eigentlichen Identifikationskarte 11, wie sie in Fig. 1d) dargestellt ist, verschmolzen. Das hier angegebene Beispiel bezieht sich auf eine Karte der Dicke 0.76 +/- 0.08 mm entsprechend ISO-Norm. Dazu werden die Schichtstrukturen in einem Laminator, welcher vorzugsweise über eine Form verfügt, welche zur Prägung einer Struktur gemäss Bezugszeichen 7 in der Lage ist, erhöhtem Druck respektive erhöhter Temperatur ausgesetzt, wobei die Temperatur respektive der Druck vorzugsweise so eingestellt werden, dass der Bereich des Glasüberganges der verwendeten Kunststofffolien erreicht wird. Bevorzugt werden spezielle Profile gefahren, so wurde beispielsweise im vorliegenden Fall unter Verwendung von Polycarbonat zunächst die Temperatur auf 157.7 Grad Celsius angehoben, anschliessend für ca. 50 Sekunden stationär gehalten, dann während ca. 50 Sekunden mit einem Ventilator gekühlt, dann ein erhöhter Druck von ca. 1.42x10⁶ Pa angelegt, dann bei konstantem Druck heruntergekühlt auf ca. 120 Grad Celsius, dann der Druck nochmals weiter auf ca. 1.5x10⁶ Pa oder sogar 1.57x10⁶ Pa erhöht. Zuletzt wurde auf 30 Grad Celsius gekühlt und der Laminator wieder geöffnet. Anschliessend können die Karten ausgestanzt werden, um eine klar definierte Umlaufkante zu erhalten.

In Fig. 1d) ist aus darstellungstechnischen Gründen zwischen Papierlage 4 und der verschmolzenen Hülle 13 ein Spalt dargestellt, tatsächlich stellt sich aber beim Larninierprozess eine innige Verbindung zwischen der Papierschicht und den Kunststofffolien ein. Kunststoff dringt beim Laminierprozess in die Papierfasern respektive in die Beschichtungen der Papierlage 4 ein und verankert gewissermassen die Hülle 13 mit der Papierlage 4. Entsprechend ist es auch nach der Lamination nicht mehr möglich, eine Kunststoffschicht von der Papierlage abzutrennen, ohne dass wenigstens Teile der obersten Schicht der Papierlage mit der Kunststoffschicht mitgerissen werden. Dadurch ergibt sich eine inhärent höhere Sicherheit einer derartigen Identifikationskarte. Ein bei der vorliegenden Technologie zusätzlich mögliches Sicherheitsmerkmal besteht darin, in der Papierlage spezifische Stanzungen (gegebenenfalls Folgen von Löchern einen Text oder Ziffern ausbildend), in welche anschliessend beim Verschmelzen die Kunststoffschichten eindringen. Insbesondere eine Kombination mit registergenau dazu angeordneten Sicherheitsmerkmalen in der Kunststoffschicht 2a und/oder oder 2b ermöglicht völlig neue Konzepte unter Verwendung von Fenstern mit spezifischen Eigenschaften.

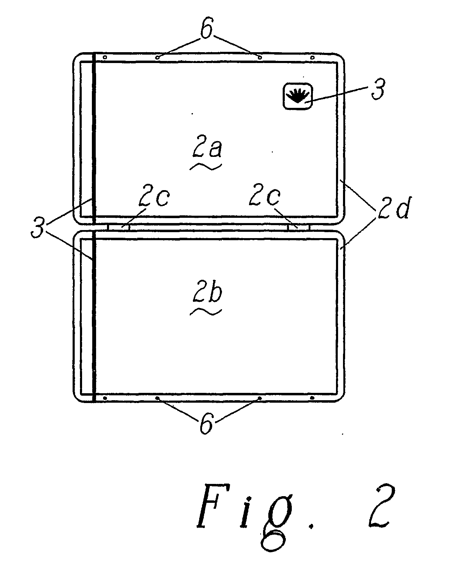

Fig. 2 zeigt eine Tasche 2, wobei diese Tasche aus zwei Schichten 2a und 2b besteht, welche an nur einer Kante über zwei Verbindungselemente 2c verbunden sind. Jede der Schichten 2a respektive 2b verfügt im Randbereich über eine Erhöhung 2d, welche entsprechend zu einer Vertiefung führt, in welche die Papierlage passgenau eingelegt werden kann. Ausserdem ist zur Fixierung der Tasche nach Einlegen der Papierlage und vor dem Verschmelzen die Möglichkeit vorgesehen, die Tasche 2 über einen Klickmechanismus der Mittel 6 zu schliessen. Die Tasche verfügt hier auf der rechten oberen Seite über ein Sicherheitsmerkmal 3, welches in einer der beiden Schichten 2a integriert ist. Weiterhin verfügt sie beispielhaft über einen Sicherheitsstreifen, welcher in beiden Schichten 2a und 2b vorliegt.

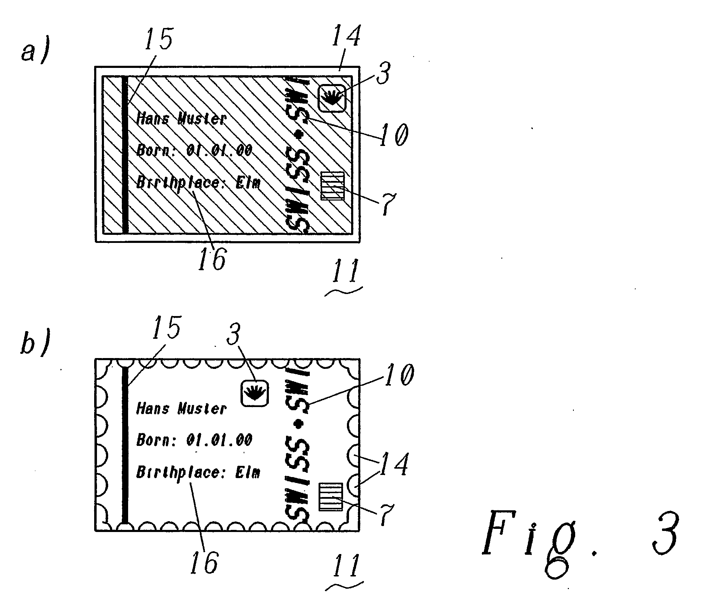

Fig. 3 zeigt Aufsichten auf Ausführungsbeispiele. Im Fall der Fig. 3a) ist eine Identifikationskarte dargestellt, welche einen umlaufenden transparenten Rand 14 aufweist. Im Bereich dieses umlaufenden Randes 14 ist die Hülle 13 vollständig verschmolzen, und entsprechend ist es auch beinahe unmöglich, im Gegensatz zu den üblichen verklebten oder verleimten Karten, die obere und die untere Kunststofflage voneinander zu trennen und so gegebenenfalls Nachbildungen einer derartigen Identifikationskarte vorzunehmen. Die Identifikationskarte 11 verfügt über einen im Papier eingelassenen Sicherheitsstreifen 15, sowie über ein Wasserzeichen 10, welches, genau wie der Sicherheitsstreifen 15, insbesondere in Durchsicht erkennbar ist. Ausserdem verfügt die Identifikationskarte über einen Aufdruck 16, mit welchem die Karte personalisiert ist. Dieser Aufdruck 16 wird zum Beispiel mit einem Tintenstrahldrucker vor der Lamination erzeugt. Zusätzlich oder auf der anderen Seite kann selbstverständlich ein Farb-Foto aufgedruckt werden, sowie weitere Informationen, dem bestimmungsgemässen Gebrauch entsprechend. Zudem verfügt die Sicherheitskarte über ein Sicherheitsmerkmal 3, welches in der Tasche integriert ist. Ein weiteres taktiles Sicherheitsmerkmal 7 ist ebenfalls vorgesehen, dieses wurde erst beim Verschmelzen der Tasche im Laminator erzeugt.

Fig. 3b) zeigt ein Ausführungsbeispiel, bei welchem der transparente Rand 14 nicht voll umlaufend ausgebildet ist. Die Papierlage verfügt hier über einen gezahnten Rand, analog zu einer Briefmarke. Entsprechend ergeben sich Abschnitte mit transparenten Randbereichen 14. Selbstverständlich können diese Randbereiche 14 eingefärbt werden, sodass die Karte bei Ansicht gar keinen transparenten Bereich mehr aufweist.

Grundsätzlich ergeben sich aus der vorgeschlagenen Verfahrensweise im Vergleich zum Stand der Technik folgende Vorteile:

In Bezug auf die Hülle wird nach dem Stand der Technik Polycarbonat mit der aktiven Schicht verschmolzen. Im Gegensatz dazu wird im vorliegenden Fall das Papier als Inlay in einer Polycarbonattasche verschmolzen. Bei der vorgeschlagenen Karte mit dem Sicherheitspapierkern, welcher in sich selber bereits einem hochgesicherten Dokument entspricht, wie es z.B. in Pässen verwendet wird, kommt all das hinzu, was die reine Plastikkarte zu bieten hat, wobei zusätzlich Sicherheitsmerkmale in der Tasche vorgesehen sind und so die Gesamtsicherheit erhöht wird. Tests haben gezeigt, dass das Auftrennen der Papier-, Plastikkombination sehr schwierig ist, weil einerseits der Kunststoff zu einem einheitlichen Körper verschmolzen wird und keine offensichtliche Schichtstruktur mehr aufweist, andererseits weil die Tinte beim Druck tief ins Papier eindringt und ausserdem beim Fusionierprozess in den Kunststoff diffundiert. Es kann also nicht einfach eine Schicht manipuliert werden, weil das Originalbild immer noch auf der anderen Schicht vorhanden und somit sichtbar ist. Dies erhöht den Aufwand für den Fälscher beträchtlich. Bei der neuentwickelten Karte kann ebenfalls eine lasersensitive Schicht mit eingearbeitet werden, so dass eine nachträgliche Beschriftung mit dieser Technologie möglich ist, falls dies gewünscht wird.

### BEZUGSZEICHENLISTE

- 1: Identifikationskarte, noch unverbunden
- 2: transparente Tasche
- 2a: obere Schicht von 2
- 2b: untere Schicht von 2
- 2c: Verbindungsbereich von 2a und 2b
- 2d: öffnungsseitige Justierhilfe resp. Rahmenkante von 2
- 3: in 2 eingebettetes oder auf 2 angeordnetes Sicherheitsmerkmal
- 4: Sicherheitspapier
- 5: in 4 eingebettetes Sicherheitselement
- 6: Hilfsmittel zur Verbindung der Schichten 2a und 2b resp. der Kanten 2d
- 7: taktiles Sicherheitsmerkmal auf 2
- 8: auf 4 aufgedrucktes oder aufgeklebtes Sicherheitsmerkmal
- 10: Wasserzeichen (schematische Darstellung)
- 11: fertige Identifikationskarte
- 12: abgeschrägter Randbereich
- 13: transparente Hülle, verschmolzen
- 14: transparenter Randbereich
- 15: Sicherheitsstreifen
- 16: Aufdruck
- 17: gezahnter Rand

## Patentansprüche

1. Sicherheitsdokument (11) mit wenigstens einer Papierlage (4), welche beidseitig von jeweils einer transparenten Kunststoffschicht (2, 13) bedeckt ist, wobei es sich bei der Papierlage (4) um ein Sicherheitspapier mit wenigstens einem ersten Sicherheitsmerkmal (5, 8, 10, 15, 16) handelt, wobei es sich bei den Kunststoffschichten (2, 13) um eine Tasche aus thermoplastischem Material handelt, welches allein unter Anwendung von erhöhtem Druck und/oder erhöhter Temperatur zu einer transparenten Hülle (13) verschmolzen ist, wobei wenigstens abschnittsweise ein Randbereich (14) vorhanden ist, bei welchem Kunststoffschichten (2, 13) unmittelbar aneinandergrenzen, und wobei ausserdem wenigstens eine der Kunststoffschichten wenigstens ein zweites Sicherheitsmerkmal (3, 7) aufweist,
**dadurch gekennzeichnet, dass**
die Tasche (2) wenigstens die obere Schicht (2a) sowie wenigstens die untere Schicht (2b) aus thermoplastischem Material aufweist, und die beiden Schichten (2a, 2b) an wenigstens einer der Kanten über wenigstens einen Verbindungsbereich (2c) verbunden sind, wobei an der Tasche (2) Mittel (2d) in Form von Vertiefungen, und/oder Erhöhungen zur exakten und passgenauen Positionierung der einzulegenden Papierlage (4) vorgesehen sind, wobei die beiden Schichten (2a,2b) an zwei oder drei Kanten über Verbindungsbereiche (2c) verbunden sind, und an wenigstens einer der nicht verbundenen Kanten der Schichten (2a, 2b) Hilfsmittel (6) zur Fixierung der Schichten (2a, 2b) bis zur Verschmelzung vorgesehen sind.

2. Sicherheitsdokument (11) nach Anspruch 1, **dadurch gekennzeichnet, dass** die Kunststoffschichten (2, 13) ohne weitere Zuhilfenahme von Haftvermittlern wie Adhäsiven zu einer Hülle (13) verschmolzen sind, und dass das Sicherheitsmerkmal (3) in der Tasche (2) integriert ist.

3. Sicherheitsdokument (11) nach einem der vorhergehenden Ansprüche, **dadurch gekennzeichnet, dass** die Kunststoffschichten (2, 13) aus einem und demselben thermoplastischen Material bestehen.

4. Sicherheitsdokument (11) nach einem der vorhergehenden Ansprüche, **dadurch gekennzeichnet, dass** die Kunststoffschichten (2, 13) ausschliesslich thermoplastisches Material mit einem Glasübergangspunkt oberhalb von 100 °C, bevorzugt oberhalb von 120 °C, insbesondere bevorzugt im Bereich von 140 bis 200 °C umfassen.

5. Sicherheitsdokument (11) nach einem der vorhergehenden Ansprüche, **dadurch gekennzeichnet, dass** es sich um eine Karte zur Identifikation und/oder Authentifikation des Trägers mit ggf. anschliessender Zugangs- resp. Bezugsberechtigungsvergabe handelt, insbesondere, dass es sich um eine Kreditkarte, um eine Identifikationskarte, eine Zugangsberechtigungskarte oder um einen Mitgliederausweis handelt.

6. Sicherheitsdokument (11) nach einem der vorhergehenden Ansprüche, **dadurch gekennzeichnet, dass** es sich beim ersten Sicherheitsmerkmal in der Papierlage (4) um ein Wasserzeichen (10) in der Papierlage (4), insbesondere Wasserzeichen eines der folgenden Typen oder Kombinationen davon: Porträt, Graustufen, Multiton , Barcode, Electrotype, oder um ein in der Papierlage (4) wenigstens teilweise oder abschnittsweise eingebettetes Sicherheitselement (5) wie insbesondere einen Sicherheitsstreifen (15), ggf. wenigstens abschnittsweise an der Oberfläche des Papiers freiliegend, oder Melierfasern, oder um einen auf der Papierlage (4) aufgebrachten Magnetstreifen (8), OVD, RFID, OCR, OVI oder Chip, oder um einen auf der Papierlage (4) aufgebrachten Sicherheitsdruck, insbesondere in Form eines fluoreszierenden Aufdruckes (8) oder eines Stahlstich-Aufdruckes (8) UV-Druck, Guillochen, Barcode, Mikroperforationen, Durchsichtregister, chemische Sicherheiten, oder um eine Kombination dieser Sicherheitsmerkmale handelt.

7. Sicherheitsdokument (11) nach einem der vorhergehenden Ansprüche, **dadurch gekennzeichnet, dass** es sich beim Sicherheitsmerkmal (3, 7) der Kunststoffschicht (2, 13) um ein auf, unter oder in der Kunststoffschicht (2,13) angeordnetes Sicherheitsmerkmal handelt.

8. Sicherheitsdokument (11) nach Anspruch 7, **dadurch gekennzeichnet, dass** das Sicherheitsmerkmal (3, 7) aus der Kunststoffschicht, insbesondere in Form eines taktilen, aussenseitig angeordneten Sicherheitsmerkmals (7) ausgebildet ist.

9. Sicherheitsdokument (11) nach einem der Ansprüche 7 oder 8, **dadurch gekennzeichnet, dass** es sich beim Sicherheitsmerkmal (3, 7) der Kunststoffschicht (2, 13) um wenigstens eines der Sicherheitsmerkmale ausgewählt aus der folgenden Gruppe handelt: Sicherheitsstreifen, Melierfasern, Magnetstreifen, OVD, RFID, Chip, Sicherheitsdruck, Planchetten, Diffraktionsgitter, Folie, Hologramm; wobei dieses Sicherheitsmerkmal (3,7) in der Matrix der Kunststoffschicht (2,13) oder an der Oberfläche der Kunststoffschicht (2,13), innenseitig und/oder aussenseitig, angeordnet oder im Fall eines Diffraktionsgitters aus dem Oberflächenmaterial der Kunststoffschichten (2,13) gebildet sein kann, und wobei das Sicherheitsmerkmal bevorzugt fluoreszierende Eigenschaften aufweist, wobei es dabei insbesondere bevorzugt linear polarisierte Absorption und/oder linear polarisierte Emission aufweist.

10. Sicherheitsdokument (11) nach einem der vorhergehenden Ansprüche, **dadurch gekennzeichnet, dass** es sich beim thermoplastischen Material um vorzugsweise transparentes thermoplastisches Polycarbonat (PC), oder aber auch themoplastische transparente Polyamide, Polyphthalamide, Polyester, Polyethylenterephthalat (PET), Polybutylenterephthalat (PBT), Polyvinylchlorid (PVC), Polymethylmethacrylat (PMMA), Acrylnitril-Butadien-Styrol-Copolymere (ABS), Polyethylen (PE) oder Polypropylen (PP) oder Mischungen oder Kombinationen davon handelt.

11. Sicherheitsdokument (11) nach einem der vorhergehenden Ansprüche, **dadurch gekennzeichnet, dass** die Kunststoffschicht (2,13) auf jeder Seite der Papierlage (4) sowie die Papierlage (4) zusammen eine Dicke aufweisen, welche bei mindestens 0.5 mm bis vorzugsweise mindestens 0.7 mm liegt.

12. Sicherheitsdokument (11) nach einem der vorhergehenden Ansprüche, **dadurch gekennzeichnet, dass** die Papierlage (4) eine etwas geringere Grösse als die sie beidseitig umgebenden Kunststoffschichten (2,13) aufweist, sodass am Rand wenigstens abschnittsweise ein transparenter farbloser oder ein eingefärbter opaker oder ein farbloser opaker Randbereich (14) verbleibt.

13. Sicherheitsdokument (11) nach einem der vorhergehenden Ansprüche, **dadurch gekennzeichnet, dass** die Papierlage (4) derart ausgebildet ist, dass das Sicherheitsdokument wenigstens in Durchsicht gegen eine Lichtquelle teilweise durchscheinend ist.

14. Sicherheitsdokument (11) nach einem der vorhergehenden Ansprüche, **dadurch gekennzeichnet, dass** die Papierlage (4) wenigstens einseitig einen insbesondere mittels eines Tintenstrahldruckers aufgebrachten Aufdruck (16) insbesondere in Form eines Fotos und/oder Personalien aufweist.

15. Tasche (2) zur Herstellung eines Sicherheitsdokuments (11) nach einem der vorhergehenden Ansprüche, wobei die Tasche (2) wenigstens eine obere Schicht (2a) sowie wenigstens eine untere Schicht (2b) aus thermoplastischem Material aufweist, wobei die beiden Schichten (2a, 2b) an wenigstens einer der Kanten über wenigstens einen Verbindungsbereich (2c) verbunden sind, und wobei bevorzugt die gesamte Tasche (2) aus einem einzigen thermoplastischen Material, insbesondere bevorzugt aus Polycarbonat oder PVC, ausgebildet ist, wobei die Tasche wenigstens ein Sicherheitsmerkmal (3,7) aufweist, **dadurch gekennzeichnet, dass** Mittel (2d) in Form von Vertiefungen, und/oder Erhöhungen vorgesehen sind, welche eine exakte und passgenaue Positionierung der einzulegenden Papierlage (4) vor der Verschmelzung erlauben, und dass die beiden Schichten (2a,2b) an zwei oder drei Kanten über Verbindungsbereiche (2c) verbunden sind und an wenigstens einer der nicht verbundenen Kanten der Schichten (2a, 2b) Hilfsmittel (6) zur Fixierung der Schichten (2a, 2b) bis zur Verschmelzung vorgesehen sind.

16. Tasche (2) nach Anspruch 15, **dadurch gekennzeichnet, dass**es sich bei den Hilfsmitteln (6) zur Fixierung der Schichten (2a, 2b) bis zur Verschmelzung um Nut/Feder, Rillen Rippen, Klickmechanismen etc. handelt.

17. Verfahren zur Herstellung eines Sicherheitsdokumentes (11) nach einem der Ansprüche 1 bis 14, **dadurch gekennzeichnet, dass** die wenigstens eine Papierlage (4) nach deren Personalisierung (16), insbesondere unter Zuhilfenahme eines Tintenstrahldruckers, in eine Tasche (2), insbesondere bevorzugt in eine Tasche nach einem der Ansprüche 15-16, eingelegt wird, und diese Schichtstruktur ohne weitere Zuhilfenahme von Haftvermittlern wie Adhäsiven unter Anwendung von Druck und/oder erhöhter Temperatur zu einer transparenten, im wesentlichen die Papierlage (4) allseitig umschliessenden Hülle (13) verschmolzen wird.

18. Verfahren nach Anspruch 17, **dadurch gekennzeichnet, dass** die Verschmelzung in einer Form stattfindet, welche dem Sicherheitsdokument (11) an der Oberfläche bei dessen Verschmelzung wenigstens ein Sicherheitsmerkmal (3,7) aufprägt, wobei es sich bei diesem Sicherheitsmerkmal (7) bevorzugt um ein taktiles Sicherheitsmerkmal und/oder ein Gitter, wie insbesondere bevorzugt eine Fresnel-Linse handelt.

19. Verfahren nach einem der Ansprüche 17 oder 18, **dadurch gekennzeichnet, dass** zum Verschmelzen eine Kombination von erhöhter Temperatur von im Bereich unterhalb der Glasübergangstemperatur des verwendeten Kunststoffs und Druck von mehr als 10⁶ Pa bis 1.6x10⁶ Pa verwendet wird, wobei insbesondere bevorzugt ein spezifisches Profil für Druck und Temperatur gefahren wird, und wobei insbesondere bevorzugt eine Verschmelzungszeit von weniger als 30 Sekunden verwendet wird.

20. Verfahren nach einem der Ansprüche 17 bis 19, **dadurch gekennzeichnet, dass** nach dem Verschmelzen zur Hülle (13) das Sicherheitsdokument (11) in seine endgültige Form gestanzt wird.

21. Verfahren nach einem der Ansprüche 17 bis 20, **dadurch gekennzeichnet, dass** vor dem Verschmelzen neben der Papierlagen (4) wenigstens ein weiteres Sicherheitsmerkmal zwischen Papierlage (4) und Kunststoffschichten (2a, 2b) eingelegt wird, wobei insbesondere bevorzugt in den Kunststoffschichten (2a, 2b) Mittel insbesondere in Form von Vertiefungen vorgesehen sind, welche eine Positionierung dieser zusätzlichen Sicherheitsmerkmale erlaubt.

22. Verfahren zur Herstellung einer Tasche (2) nach einem der Ansprüche 15-16, **dadurch gekennzeichnet, dass** in einem Urform-Verfahren, insbesondere in einem RIM-Verfahren die Tasche ausgehend von einem Granulat ausgebildet wird, wobei wenigstens ein Sicherheitsmerkmal (3) in der Form derart vorgesehen ist, dass dieses anschliessend in und/oder auf der Tasche (2) fixiert ist.

23. Verfahren nach Anspruch 22, **dadurch gekennzeichnet, dass** die Tasche aus Polycarbonat- und/oder einem PVC-Granulat bei einer Temperatur im Bereich von 300-400°C und einem Druck im Bereich von 200-300 bar innerhalb von 5-10 Sekunden hergestellt wird.

24. Verwendung eines Sicherheitsdokuments (11) gemäss einem der Ansprüche 1 bis 14 als Karte zur Identifikation und/oder Authentifikation des Trägers mit ggf. anschliessender Zugangs- resp. Bezugsberechtigungsvergabe handelt, insbesondere, als Personalausweis, Kreditkarte, Identifikationskarte, Zugangsberechtigungskarte oder als Mitgliederausweis.

## Claims

1. A security document (11) with at least one paper layer (4), both sides of which have been covered, in each case by a transparent plastics layer (2, 13),
wherein
the paper layer (4) is a security paper with at least one first security feature (5, 8, 10, 15, 16), and the plastics layers (2, 13) are a pocket composed of thermoplastic material which has been fused solely with use of elevated pressure and/or of elevated temperature to give a transparent sheath (13), where, at least in one or more sections, there is a marginal region (14) in which plastics layers (2, 13) immediately adjoin one another, and where moreover at least one of the plastics layers has at least one second security feature (3, 7),
**characterized in that**
the pocket (2) has at least the upper layer (2a), and also at least the lower layer (2b), composed of thermoplastic material, and that the two layers (2a, 2b) have been bonded at at least one of the edges by way of at least one bonding region (2c),
wherein in the pocket (2) means (2d) in the form of depressions and/or raised areas are provided for the exact and precise fit positioning of the paper layer (4) to be inserted,
wherein the two layers (2a, 2b) have been bonded at two or three edges by way of bonding regions (2c), and at at least one of the unbonded edges of the layers (2a, 2b), aids (6) have been provided for fixing of the layers (2a, 2b) until the fusion process.

2. The security document (11) as claimed in claim 1, **characterized in that** the plastics layers (2, 13) have been fused without further assistance of adhesion promoters such as adhesives to give a sheath (13), and **in that** the security feature (3) has been integrated in the pocket (2).

3. The security document (11) as claimed in any of the preceding claims, **characterized in that** the plastics layers (2, 13) are composed of one and the same thermoplastic material.

4. The security document (11) as claimed in any of the preceding claims, **characterized in that** the plastics layers (2, 13) encompass exclusively thermoplastic material with a glass transition temperature above 100°C, preferably above 120°C, particularly preferably in the range from 140 to 200°C.

5. The security document (11) as claimed in any of the preceding claims, **characterized in that** it is a card for identification and/or authentication of the carrier with, if appropriate, subsequent issue of right to access or right to acquisition, and in particular is a credit card, an identification card, an access card, or a members' pass.

6. The security document (11) as claimed in any of the preceding claims, **characterized in that** the first security feature in the paper layer (4) is a watermark (10) in the paper layer (4), in particular watermark of one of the following types or combinations thereof: portrait, gray-level, multitone, barcode, electrotype, or is a security element (5) embedded at least in part or in one or more sections within the paper layer (4), e.g. in particular a security strip (15), optionally exposed at least in one or more sections at the surface of the paper, or variously colored fibers, or is a OVD, RFID, OCR, OVI or chip, or magnetic strip (8) applied to the paper layer (4), or is a security print applied to the paper layer (4), in particular in the form of an applied fluorescent print (8) or of an applied steel intaglio print (8) UV pressure, guilloche, barcode, microperforations, transparent register, chemical securities, or is a combination of these security features.

7. The security document (11) as claimed in any of the preceding claims, **characterized in that** the security feature (3, 7) of the plastics layer (2, 13) is a security feature arranged on, under, or in the plastics layer (2, 13).

8. The security document (11) as claimed in claim 7, **characterized in that** the security feature (3, 7) has been formed from the plastics layer, in particular in the form of a tactile security feature (7) arranged on the outside.

9. The security document (11) as claimed in either claim 7 or 8, **characterized in that** the security feature (3, 7) of the plastics layer (2, 13) is at least one of the security features selected from the following group: security strip, variously colored fibers, magnetic strip, OVD, RFID, chip, security print, planchettes, diffraction grating, foil, hologram; where this security feature (3, 7) has been arranged on the inside and/or on the outside, in the matrix of the plastics layer (2, 13) or at the surface of the plastics layer (2, 13), or, in the case of a diffraction grating, can have been formed from the surface material of the plastics layers (2, 13), and where the security feature preferably has fluorescent properties, particularly preferably here having linear polarized absorption and/or linear polarized emission.

10. The security document (11) as claimed in any of the preceding claims, **characterized in that** the thermoplastic material is preferably transparent thermoplastic polycarbonate (PC), or else transparent thermoplastic polyamides, polyphthalamides, polyester, polyethylene terephthalate (PET), polybutylene terephthalate (PBT), polyvinyl chloride (PVC), polymethyl methacrylate (PMMA), acrylonitrile-butadiene-styrene copolymers (ABS), polyethylene (PE) or polypropylene (PP), or a mixture or combination thereof.

11. The security document (11) as claimed in any of the preceding claims, **characterized in that** the plastics layer (2, 13) on each side of the paper layer (4), and the paper layer (4) together have a thickness which is at least 0.5 mm to preferably at least 0.7 mm.

12. The security document (11) as claimed in any of the preceding claims, **characterized in that** the size of the paper layer (4) is somewhat smaller than that of the plastics layers (2, 13) which surround it on both sides, so that, at least in one or more sections, there is a remaining transparent colorless or a remaining colored opaque, or a remaining colorless opaque marginal region (14) at the margin.

13. The security document (11) as claimed in any of the preceding claims, **characterized in that** the design of the paper layer (4) is such that the security document is to some extent translucent at least when viewed in front of a light source.

14. The security document (11) as claimed in any of the preceding claims, **characterized in that** at least one side of the paper layer (4) has an applied print (16), in particular applied by means of an ink-jet printer, in particular in the form of a photo and/or personal details.

15. A pocket (2) for production of a security document (11) as claimed in any of the preceding claims, wherein the pocket (2) has at least one upper layer (2a), and also at least one lower layer (2b), composed of thermoplastic material, where the two layers (2a, 2b) are bonded at at least one of the edges by way of at least one bonding region (2c), and where the entire pocket (2) preferably is formed from a single thermoplastic material, particularly preferably from polycarbonate or PVC, and where the pocket has at least one security feature (3, 7), **characterized in that** means (2d) in the form of depressions and/or raised areas are provided which permit an exact and precise fit positioning of the paper layer (4) to be inserted, prior to the fusion process, and **in that** the two layers (2a, 2b) are bonded at two or three edges by way of bonding regions (2c), and at at least one of the unbonded edges of the layers (2a, 2b), aids (6) have been provided for fixing of the layers (2a, 2b) until the fusion process.

16. The pocket (2) as claimed in claim 15, **characterized in that** the aids (6) for the fixing of the layers (2a, 2b) until the fusion process are tongue-and-groove, grooves, ribs, click mechanisms, etc.

17. A process for production of a security document (11) as claimed in any of claims 1 to 14, **characterized in that**, after the at least one paper layer (4) has been personalized (16), in particular with the aid of an ink-jet printer, it is inserted in a pocket (2), particularly preferably in a pocket as claimed in any of claims 15 to 16, and this layer structure is fused with use of pressure and/or of elevated temperature to give a transparent sheath (13) in essence enclosing the paper layer (4) on all sides, without further assistance of adhesion promoters, such as adhesives.

18. The process as claimed in claim 17, **characterized in that** the fusion process takes place in a mold which embosses at least one security feature (3, 7) on the surface of the security document (11) during its fusion, this security feature (7) preferably being a tactile security feature and/or a grating, such as particularly preferably a Fresnel lens.

19. The process as claimed in claim 17 or 18, **characterized in that** a combination of elevated temperature in the range below the glass transition temperature of the plastic used and pressure of more than 10⁶ Pa to 1.6 x 10⁶ Pa is used for the fusion process, and a specific profile is particularly preferably traversed here in relation to pressure and temperature, and where the fusion time used is particularly preferably less than 30 seconds.

20. The process as claimed in any of claims 17 to 19, **characterized in that**, after the fusion process to give the sheath (13), the security document (11) is stamped to give its final form.

21. The process as claimed in any of claims 17 to 20, **characterized in that**, prior to the fusion process, alongside the paper layers (4) at least one further security feature is inserted between paper layer (4) and plastic layers (2a, 2b), a particular preference here being that, in the plastics layers (2a, 2b), means have been provided in particular in the form of depressions, permitting positioning of these additional security features.

22. The process for production of a pocket (2) as claimed in any of claims 15 to 16, **characterized in that**, in a molding process, in particular in an RIM process, the pocket is formed from pellets, at least one security feature (3) has been provided in the mold here in such a way that this then has been fixed in and/or on the pocket (2).

23. The process as claimed in claim 22, **characterized in that** the pocket is produced from polycarbonate pellets and/or from PVC pellets at a temperature in the range from 300 to 400°C and at a pressure in the range from 200 to 300 bar within a period of from 5 to 10 seconds.

24. The use of a security document (11) as claimed in any of claims 1 to 14 as a card for identification and/or authentication of the carrier with, if appropriate, subsequent issue of right to access or right to acquisition, and in particular as an identity card, a credit card, an identification card, an access card, or a members' pass.

## Revendications

1. Document de sécurité (11) avec au moins une couche de papier (4), qui sur ses deux faces est recouverte de respectivement une couche de matière plastique (2, 13), la couche de papier (4), il étant un papier de sécurité avec au moins un premier attribut de sécurité (5, 8, 10, 15, 16), et les couches de matière plastique (2, 13), il étant une poche en matière thermoplastique, qu'on fusionne en une enveloppe transparente (13), seulement par utilisation d'une pression élevée et/ou d'une température élevée, un secteur de bordure (14), sur lequel des couches de matière plastique (2, 13) sont directement adjacentes étant présent au moins par sections et au moins l'une des couches de matière plastique comportant par ailleurs au moins un deuxième attribut de sécurité (3, 7),
**caractérisé en ce que**
la poche (2) comporte au moins la couche supérieure (2a), et au moins la couche inférieure (2b) en matière thermoplastique, les deux couches (2a, 2b) sont reliées sur au moins l'un des bords par au moins un secteur de liaison (2c), en ayant prévu des moyens (2d) conçus sous la forme de creux et/ou de bosses pour le positionnement exact et de façon précisément ajustée de la couche de papier (4) à insérer, les deux couches (2a, 2b) étant reliées sur deux ou trois bords par des secteurs de liaison (2c), et sur au moins l'un des bords non reliée des couches (2a, 2b), en ayant prévu des moyens auxiliaires (6) pour la fixation des couches (2a, 2b) jusqu'à la fusion.

2. Document de sécurité (11) selon la revendication 1, **caractérisé en ce que** sans avoir recours à des agents d'adhérence, comme des adhésifs on fait fusionner les couches de matière plastique (2, 13) en une enveloppe (13) et **en ce que** l'attribut de sécurité (3) est intégré dans la poche (2).

3. Document de sécurité (11) selon l'une quelconque des revendications précédentes, **caractérisé en ce que** les couches de matière plastique (2, 13) sont en une seule et même matière plastique.

4. Document de sécurité (11) selon l'une quelconque des revendications précédentes, **caractérisé en ce que** les couches de matière plastique (2, 13) comprennent uniquement une matière thermoplastique avec un point de transition vitreuse supérieur à 100°C, de préférence supérieur à 120°C, de façon particulièrement préférée supérieur à de 140 à 200°C.

5. Document de sécurité (11) selon l'une quelconque des revendications précédentes, **caractérisé en ce qu'**il s'agit d'une carte pour l'identification et/ou pour l'authentification du porteur, conférant le cas échéant des droits d'accès ou des droits d'abonnement, notamment qu'il s'agit d'une carte de crédit, d'une carte d'identification, d'une carte d'accès ou d'une carte de membre.

6. Document de sécurité (11) selon l'une quelconque des revendications précédentes, **caractérisé en ce que** concernant le premier attribut de sécurité dans la couche de papier (4), il s'agit d'un filigrane (10) dans la couche de papier (4), notamment d'un filigrane d'un des types suivants ou d'une association de ces derniers : portrait, niveaux de gris, multiton, code barre, électrotype, ou d'un élément de sécurité (5) incorporé au moins partiellement ou par sections dans la couche de papier (4), comme par exemple d'une bande de sécurité (15), le cas échéant dégagée au moins par sections sur la surface du papier, ou de fibres chinées, ou d'une bande magnétique (8) appliquée sur la couche de papier (4), OVD, RFID, OCR, OVI ou puce, ou d'une impression de sécurité appliquée sur la couche de papier (4), notamment sous la forme d'une impression fluorescente (8) ou d'une impression par gravure sur acier (8), d'une impression UV, de guilloches, d'un code barre, de micro-perforations, de transvision, de sécurités chimiques ou d'une association de ces attributs de sécurité.

7. Document de sécurité (11) selon l'une quelconque des revendications précédentes, **caractérisé en ce que** concernant l'attribut de sécurité (3, 7) de la couche de matière plastique (2, 13), il s'agit d'un attribut de sécurité disposé sur, sous ou dans la couche de matière plastique (2, 13).

8. Document de sécurité (11) selon la revendication 7, **caractérisé en ce que** l'attribut de sécurité (3,7) est créé à partir de la couche de matière plastique, notamment sous la forme d'un attribut de sécurité tactile (7), disposé sur la face extérieure.

9. Document de sécurité (11) selon l'une quelconque des revendications 7 ou 8, **caractérisé en ce que** concernant l'attribut de sécurité (3, 7) de la couche de matière plastique (2, 13), il s'agit d'au moins l'un des attributs de sécurité choisis dans le groupe suivant : bande de sécurité, fibres chinées, bande magnétique, OVD, RFID, puce, impression de sécurité, planchettes, réseau de diffraction, film, hologramme ; cet attribut de sécurité (3, 7) pouvant être disposé dans la matrice de la couche de matière plastique (2, 13) ou sur la surface de la couche de matière plastique (2, 13), à l'intérieur et/ou à l'extérieur ou dans le cas d'un réseau de diffraction, pouvant être créé à partir de la matière de surface des couches de matière plastique (2, 13) et l'attribut de sécurité présentant de préférence des caractéristique fluorescentes, dans lequel cas, il fait preuve de façon particulièrement préférée d'une absorption linéaire polarisée et/ou d'une émission linéaire polarisée.

10. Document de sécurité (11) selon l'une quelconque des revendications précédentes, **caractérisé en ce que** concernant la matière thermoplastique, il s'agit de préférence de polycarbonate transparent (PC), mais également de polyamide, de polyphtalamide, de polyester, de polyéthylène téréphtalate (PET), de polybutylène téréphtalate (PBT), de chlorure de polyvinyle (PVC), de polyméthyle méthacrylate (PMMA) de copolymères de styrène/butadiène/acrylonitrile (ABS), de polyéthylène (PE) ou de polypropylène (PP) thermoplastiques transparents ou des mélanges, respectivement de différentes couches de ces derniers.

11. Document de sécurité (11) selon l'une quelconque des revendications précédentes, **caractérisé en ce que** la couche de matière plastique (2, 13) sur chaque face de la couche de papier (4), ainsi que la couche de papier (4) réunies ont une épaisseur qui se situe au moins à 0,5 mm, de préférence jusqu'à au moins 0,7 mm.

12. Document de sécurité (11) selon l'une quelconque des revendications précédentes, **caractérisé en ce que** la couche de papier (4) a une dimension légèrement inférieure à celle des couches de matière plastique (2, 13) qui l'entourent sur les deux faces, pour qu'un secteur de bordure (14) transparent incolore ou teinté opaque ou incolore opaque reste préservé au moins par sections sur le bord.

13. Document de sécurité (11) selon l'une quelconque des revendications précédentes, **caractérisé en ce que** la couche de papier (4) est conçue de façon à ce que le document de sécurité soit partiellement diaphane, au moins en transparence, contre une source de lumière.

14. Document de sécurité (11) selon l'une quelconque des revendications précédentes, **caractérisé en ce que** la couche de papier (4) comporte au moins sur un côté une impression (16) appliquée notamment au moyen d'une imprimante à jet d'encre, notamment sous la forme d'une photo et/ou de coordonnées personnelles.

15. Poche (2) pour la fabrication d'un document de sécurité (11) selon l'une quelconque des revendications précédentes, la poche (2) comportant au moins une couche supérieure (2a), et au moins une couche inférieure (2b) en matière thermoplastique, les deux couches (2a, 2b) étant reliées sur au moins l'un des bords par au moins un secteur de liaison (2c) et de préférence l'ensemble de la poche (2) étant conçu en une seule matière thermoplastique, notamment de préférence en polycarbonate ou en PVC, et la poche comportant au moins un attribut de sécurité (3, 7), **caractérisée en ce qu'**on a prévu des moyens (2d) conçus sous la forme de creux et/ou de bosses permettant un positionnement exact et de façon précisément ajustée de la couche de papier (4) à insérer avant la fusion, et **en ce que** les deux couches (2a, 2b) sont reliées sur deux ou trois bords par des secteurs de liaison (2c) et qu'on a prévu sur au moins l'un des bords non reliée des couches (2a, 2b) des moyens auxiliaires (6) pour la fixation des couches (2a, 2b) jusqu'à la fusion.

16. Poche (2) selon le revendication 15, **caractérisée en ce que** les moyens auxiliaires (6) pour la fixation des couches (2a, 2b) jusqu'à la fusion sont , des rainures/languettes, des gorges, des nervures, des mécanismes d'enclenchement, etc.

17. Procédé de fabrication d'un document de sécurité (11) selon l'une quelconque des revendications 1 à 14, **caractérisé en ce qu'**après sa personnalisation (16), notamment à l'aide d'une imprimante à jet d'encre, on insère la au moins une couche de papier (4) dans une poche (2), de façon particulièrement préférée dans une poche selon l'une quelconque des revendications 15 à 16, et **en ce qu'**on fait fusionner cette structure stratifiée sans recours à un agent d'adhérence comme des adhésifs, en utilisant une pression et/ou une température élevée en une enveloppe transparente (13), entourant sensiblement la couche de papier (4) de toutes parts.

18. Procédé selon la revendication 17, **caractérisé en ce que** la fusion est assurée sous une forme consistant à estamper sur la surface du document de sécurité (11), lors de sa fusion au moins un attribut de sécurité (3, 7), cet attribut de sécurité (7) étant de préférence un attribut de sécurité tactile et/ou un réseau, comme de façon particulièrement préférée une lentille de Fresnel.

19. Procédé selon l'une quelconque des revendications 17 ou 18, **caractérisé en ce que** pour la fusion, on utilise une association de température élevée située dans la plage inférieure à la température de transition vitreuse de la matière plastique utilisée et d'une pression supérieure à 10⁶ Pa jusqu'à 1,6x10⁶ Pa, en suivant de façon particulièrement préférée un profil spécifique pour la pression et la température, et en utilisant de façon particulièrement préférée un temps de fusion inférieur à 30 secondes.

20. Procédé selon l'une quelconque des revendications 17 à 19, **caractérisé en ce qu'**après la fusion en une enveloppe (13), on découpe le document de sécurité (11) dans sa forme finale.

21. Procédé selon l'une quelconque des revendications 17 à 20, **caractérisé en ce qu'**avant la fusion, hormis la couche en papier (4), on insère au moins un attribut de sécurité supplémentaire entre la couche de papier (4) et les couches de matière plastique (2a, 2b), dans lequel cas, on prévoit de façon particulièrement préférée dans les couches de matière plastique (2a, 2b) des moyens, notamment sous la forme de creux, qui permettent un positionnement de ces attributs de sécurité supplémentaires.

22. Procédé de fabrication d'une poche (2) selon l'une quelconque des revendications 15 à 16, **caractérisé en ce que** dans un procédé de moulage initial, notamment un procédé de moulage RIM, on crée la poche à partir d'un granulé, au moins un attribut de sécurité (3) étant prévu dans le moule, de façon à être fixé ensuite dans et/ou sur la poche (2).

23. Procédé selon la revendication 22, **caractérisé en ce qu'**on fabrique la poche en granulés de polycarbonate et/ou de PVC, à une température dans la plage de 300 à 400°C et sous une pression dans la plage de 200 à 300 bar, dans un délai de 5 à 10 secondes.

24. Utilisation d'un document de sécurité (11) selon l'une quelconque des revendications 1 à 14 en tant que carte pour l'identification et/ou l'authentification du porteur, conférant ensuite le cas échéant un droit d'accès, respectivement un droit d'abonnement, notamment en tant que carte d'identité, que carte de crédit, que carte d'identification, que carte d'accès ou que carte de membre.
